(19) Europäisches Patentamt
European Patent Office
Office européen des brevets

(11) EP 2 096 647 A1

(12) **EUROPEAN PATENT APPLICATION**
published in accordance with Art. 153(4) EPC

(43) Date of publication:
**02.09.2009 Bulletin 2009/36**

(21) Application number: **07849965.4**

(22) Date of filing: **26.11.2007**

(51) Int Cl.:
***H01B 13/00*** (2006.01) ***C08G 75/23*** (2006.01)
***C08G 81/00*** (2006.01) ***C08J 5/22*** (2006.01)
***H01B 1/06*** (2006.01) ***H01M 8/02*** (2006.01)
***H01M 8/10*** (2006.01)

(86) International application number:
**PCT/JP2007/073260**

(87) International publication number:
**WO 2008/066188 (05.06.2008 Gazette 2008/23)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **27.11.2006 JP 2006318298**

(71) Applicant: **Sumitomo Chemical Company, Limited**
**Tokyo 104-8260 (JP)**

(72) Inventor: **NODONO, Mitsunori**
**Tsukuba-shi**
**Ibaraki 305-0045 (JP)**

(74) Representative: **Vossius & Partner**
**Siebertstraße 4**
**81675 München (DE)**

(54) **PROCESS FOR PRODUCTION OF POLYELECTROLYTE MEMBRANE AND POLYELECTROLYTE MEMBRANE**

(57) A method for continuously producing a polymer electrolyte membrane including:
(i) a preparation step for preparing a polymer electrolyte solution by dissolving a polymer electrolyte containing an ion conductive polymer having an ion-exchange group in an organic solvent capable of dissolving the polymer electrolyte,
(ii) a coating step for continuously obtaining a laminate film 1 wherein a supporting substrate and a layer containing an ion conductive polymer are laminated, by casting the polymer electrolyte solution obtained in the step (i) onto the continuously fed supporting substrate, and
(iii) a drying step for continuously obtaining a laminate film 2 wherein the supporting substrate and a polymer electrolyte membrane intermediate are laminated, by removing the organic solvent remaining in the layer containing an ion conductive polymer with passing the laminate film 1 obtained in the step (ii) in a drying furnace; wherein
the residence time of the laminate film 1 in the drying furnace in the step (iii) is 50 minutes or shorter and the remaining organic solvent concentration in the polymer electrolyte membrane intermediate in the laminate film 2 immediately after the laminate film 2 passes through the drying furnace is 40% by weight or lower.

Fig.1

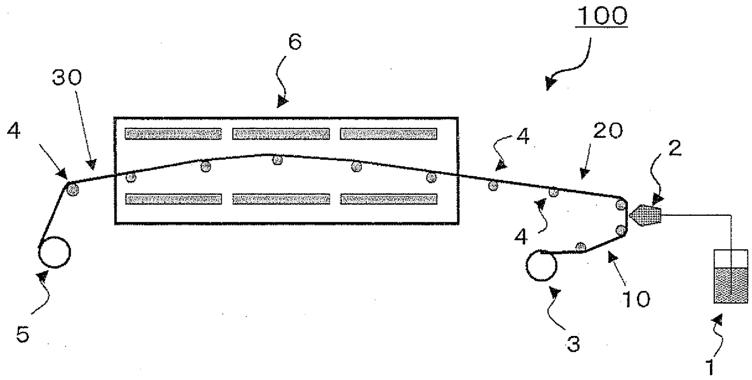


EP 2 096 647 A1

**Description**

TECHNICAL FIELD

The present invention relates to a method for continuously producing a polymer electrolyte membrane. More particularly, the present invention relates to a method for continuously producing a polymer electrolyte membrane preferably usable for a polymer electrolyte fuel cell.

BACKGROUND ART

As a polymer electrolyte membrane to be used for a fuel cell, those including perfluorosulfonic acid type polymers such as Nafion (registered trade name of Du Pont) have conventionally been investigated. On the other hand, to seek higher heat resistance and mechanical properties, polymer electrolyte membranes comprising hydrocarbon type polymer electrolytes such as sulfonated polyether ketone type polymers (e.g., see Japanese translation of PCT application No. 11-502249), sulfonated polyether sulfone type polymers (e.g., see Japanese Patent Application Laid-Open (JP-A) Nos. 10-45913 and 10-21943) have actively been investigated for uses for polymer electrolyte fuel cells.
Incidentally, as properties required for polymer electrolyte membranes applied for polymer electrolyte fuel cells (hereinafter, sometimes referred simply to as "fuel cell"), high proton conductivity and excellent size stability at the time of water absorption (hereinafter, referred to as "water absorption size stability") are included. As a polymer electrolyte membrane which accomplishes these properties at high levels, JP-A No. 2001-250567 proposes that a block copolymer comprising a block having a sulfonic acid group and a block having substantially no sulfonic acid group can be a polymer electrolyte suitable for a proton conductive membrane of the above fuel cells.

DISCLOSURE OF THE INVENTION

The polymer electrolyte described in JP-A No. 2001-250567 has excellent properties as a proton conductive membrane to be used for a polymer electrolyte fuel ceil; however if the polymer electrolyte membrane is to be obtained industrially by employing a continuous membrane formation method using solution casting method, the proton conductivity and water absorption size stability are lowered and thus desired properties are not obtained in some cases.
It is an object of the present invention not only to solve the problem as described above but also to provide an industrially advantageous method for continuously producing a polymer electrolyte membrane which accomplishes ion conductivity and water absorption size stability at high levels.
The present inventors have made various investigations to achieve the above objects and consequently have completed the present invention.
That is, the present invention provides:

<1> A method for continuously producing a polymer electrolyte membrane including:

(i) a preparation step for preparing a polymer electrolyte solution by dissolving a polymer electrolyte containing an ion conductive polymer having an ion-exchange group in an organic solvent capable of dissolving the polymer electrolyte,
(ii) a coating step for continuously obtaining a laminate film 1 wherein a supporting substrate and a layer containing an ion conductive polymer are laminated, by casting the polymer electrolyte solution obtained in the step (i) onto the continuously fed supporting substrate, and
(iii) a drying step for continuously obtaining a laminate film 2 wherein the supporting substrate and a polymer electrolyte membrane intermediate are laminated, by removing the organic solvent remaining in the layer containing an ion conductive polymer with passing the laminate film 1 obtained in the step (ii) in a drying furnace; wherein
the residence time of the laminate film 1 in the drying furnace in the step (iii) is 50 minutes or shorter and the remaining organic solvent concentration in the polymer electrolyte membrane intermediate in the laminate film 2 immediately after the laminate film 2 passes through the drying furnace is 40% by weight or lower.
Further, the present invention provides the following <2> to <12> as preferable embodiments according to <1>.

<2> The method for continuously producing a polymer electrolyte membrane according to <1>, wherein the drying furnace has a heating zone of 60 to 130°C.
<3> The method for continuously producing a polymer electrolyte membrane according to <1> or <2>, wherein the remaining organic solvent concentration in the layer containing an ion conductive polymer in the laminate film 1 immediately before the laminate film 1 comes in the drying furnace exceeds 70% by weight.

<4> The method for continuously producing a polymer electrolyte membrane according to any one of <1> to <3>, further comprising (iv) a winding step for winding the laminate film 2 obtained in the step (iii) on a winding core.
<5> The method for continuously producing a polymer electrolyte membrane according to any one of <1> to <4>, wherein the ion conductive polymer has an aromatic ring constituting the main chain and the ion-exchange group directly bonded or indirectly bonded through another atom or an atomic group to the aromatic ring constituting the main chain.
<6> The method for continuously producing a polymer electrolyte membrane according to any one of <1> to <5>, wherein the ion conductive polymer includes:

one or more structure units having an ion-exchange group selected from the following (1a), (2a), (3a) and (4a), (hereinafter, sometimes abbreviated as "(1a) to (4a)")

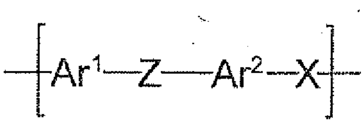
(1a)

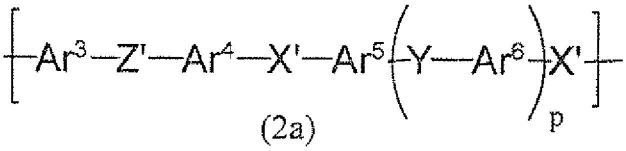
(2a)

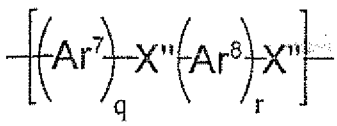
(3a)

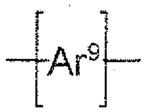
(4a)

wherein $Ar^1$ to $Ar^9$ each independently denote a divalent aromatic group having an aromatic ring constituting the main chain and optionally having a side chain having an aromatic ring and having an ion-exchange group directly bonded to at least one aromatic ring selected from the group consisting of the aromatic ring constituting the main chain and the aromatic ring in the side chain; Z and Z' each independently denote -CO- or $-SO_2-$; X, X', and X" each independently denote -O- or -S-; Y denotes a direct bond or a group defined by the following formula (100); p denotes 0, 1, or 2; and q and r each independently denote 1, 2, or 3 and
one or more structure units having no ion-exchange group selected from the following (1b), (2b), (3b) and (4b), (hereinafter, sometimes abbreviated as "(1b) to (4b)")

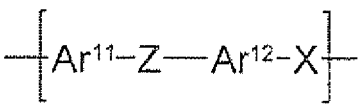
(1b)

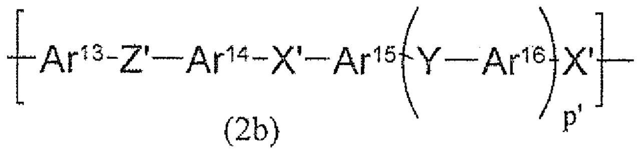
(2b)

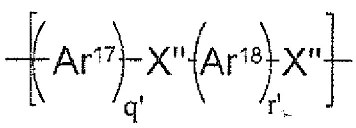
(3b)

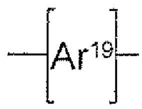
(4b)

wherein $Ar^{11}$ to $Ar^{19}$ each independently denote a divalent aromatic group optionally having a substituent group as a side chain; Z and Z' each independently denote -CO- or $-SO_2-$; X, X', , and X" each independently denote -O- or -S-; Y denotes a direct bond or a group defined by the following formula (100); p' denotes 0, 1, or 2; and q' and r' each independently denote 1, 2, or 3;

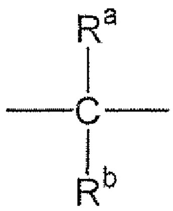

(100)

wherein $R^a$ and $R^b$ each independently denote a hydrogen atom, an optionally substituted alkyl group having 1 to 10 carbon atoms, an optionally substituted alkoxy group having 1 to 10 carbon atoms, an optionally substituted aryl group having 6 to 18 carbon atoms, an optionally substituted aryloxy group having 6 to 18 carbon atoms, or an optionally substituted acryl group having 2 to 20 carbon atoms and $R^a$ and $R^b$ may be bonded with each other to form a ring in combination with the carbon atoms to which they are bonded.

<7> The method for continuously producing a polymer electrolyte membrane according to any one of <1> to <6>, wherein the ion conductive polymer is a copolymer including one or more blocks (A) having an ion-exchange group and one or more blocks (B) having substantially no ion-exchange group, and having block copolymerization or graft copolymerization mode.

<8> The method for continuously producing a polymer electrolyte membrane according to <7>, wherein the ion conductive polymer includes a block in which the ion-exchange groups is directly bonded to the aromatic ring constituting the main chain as the blocks (A) having ion-exchange groups.

<9> The method for continuously producing a polymer electrolyte membrane according to <7> or <8>, wherein the ion conductive polymer includes, as the blocks (A) having an ion-exchange group, a block represented by the following formula (4a')

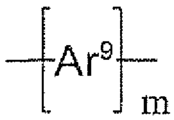

(4a')

wherein $Ar^9$ is the same in above formula (4b) and m denotes a polymerization degree of the structure unit constituting the block) and, as the blocks (B) having substantially no ion-exchange group, one or more blocks selected from the following formulas (1b'), (2b') and (3b')

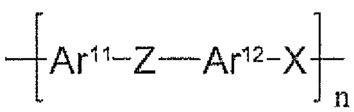

(1b')

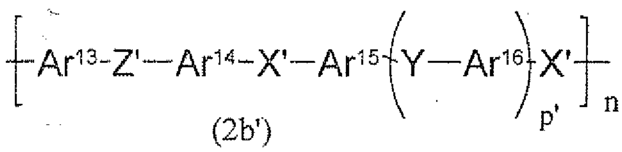

(2b')

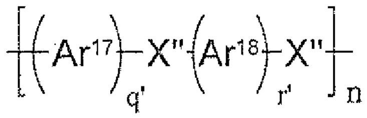

(3b')

wherein $Ar^{11}$ to $Ar^{18}$ each independently denote a divalent aromatic group optionally having a substituent group as a side chain; n denotes a polymerization degree of the structure unit constituting the block; and other reference characters denote the same as described above.

<10> The method for continuously producing a polymer electrolyte membrane according to any one of <1> to <9>, wherein the polymer electrolyte membrane has a microphase-separated structure into at least two or more micro-phases.

<11> The method for continuously producing a polymer electrolyte membrane according to <10>, wherein the ion conductive polymer is a copolymer including one or more blocks (A) having an ion-exchange group and one or more blocks (B) having substantially no ion-exchange group,having block copolymerization or graft copolymerization mode and the polymer electrolyte membrane includes a microphase-separated structure containing a phase in which density of the blocks (A) an ion-exchange group is higher than that of the blocks (B) having substantially no ion-exchange group, and a phase in which density of the blocks (B) having substantially no ion-exchange group is higher than that of the blocks (A) having an ion-exchange group.

<12> The method for continuously producing a polymer electrolyte membrane according to any one of <1> to <11>, wherein the ion conductive polymer has a sulfonic acid group as the ion-exchange group.

Furthermore, the present invention provides a polymer electrolyte membrane obtained by any one of the above production methods and a membrane electrode assembly and a fuel cell comprising the polymer electrolyte membrane.

According to the present invention, a polymer electrolyte membrane which accomplishes ion conductivity and water absorption size stability at high levels can be obtained by an industrially advantageous continuous membrane formation method.

Since having the above properties, the polymer electrolyte provided by the present invention can be used preferably as an ion conductive membrane of electrochemical devices, particularly fuel cells or the like, and thus it is industrially extremely useful.

BRIEF DESCRIPTION OF DRAWINGS

Fig. 1 is a schematic view showing main parts of the first embodiment of the present invention.
Fig. 2 is a schematic view showing main parts of the second embodiment of the present invention.

DESCRIPTION OF NUMERALS

10: Supporting substrate
20: Laminate film 1
30: Laminate film 2
6, 6A, 6B, 6C: Drying furnace
2: Coating apparatus
100, 200: Continuous type production apparatus for polymer electrolyte membrane

MODE FOR CARRYING OUT THE INVENTION

Hereinafter, preferred embodiments of the present invention will be described with reference to drawings based on the necessity.

The continuous production method of the present invention is a method for continuously producing a polymer electrolyte membrane involving the above steps (i), (ii) and (iii) wherein the residence time of the laminate film 1 in a drying furnace in the above (iii) is 50 minutes or less and the organic solvent remaining amount in the polymer electrolyte membrane intermediate in the laminate film 2 immediately after the film passes through the drying furnace is 40% by weight or less. The drying furnace is a furnace which carries out drying treatment for drying and removing the organic solvent from the layer containing an ion conductive polymer of the laminate film 1 in temperature condition of the ambient temperature (room temperature) or higher.

Herein, the set temperature of the drying furnace is preferably in a range of 40 to 150°C and it may properly be optimized in accordance with the type of the drying furnace.

A method for adjusting the set temperature may involve adjusting a set temperature of electrical heating plates to a range of 40 to 150°C in the case of a manner that the electrical heating plates are arranged on the opposite to the layer side containing an ion conductive polymer of the laminate film 1 fed in the drying furnace and the organic solvent is removed from the layer containing an ion conductive polymer in the laminate film 1.

In the case of a manner that the organic solvent is removed from the layer containing an ion conductive polymer

in the laminate film 1 buy using a hot-air heater, the temperature of the hot air to be used is set in a range of 40 to 150°C. Here, as the hot air to be used for such a drying furnace, air or those including an inert gas such as nitrogen may also be used and steam may also be used. Further, a manner of installing a duct leeward of the hot air may also be employed.

Furthermore, a manner of removing the organic solvent from the layer containing an ion conductive polymer in the laminate film buy using an energy beam selected from far infrared rays, infrared rays, microwave and high frequency. This drying furnace generally has a manner of heating the supporting substrate by radiating the energy beam from the supporting substrate side of the laminate film 1 to remove the organic solvent from the layer containing an ion conductive polymer. In this case, the correlation between the irradiance level of the energy beam to the material of the supporting substrate to be used and the heat generation temperature of the supporting substrate is previously determined and the supporting substrate side of the laminate film 1 may be irradiated with the energy beam in a manner that the heat generation temperature of the supporting substrate becomes in a range of 40 to 150°C.

Among these manners of the drying furnaces, from the viewpoint of the economy in terms of the installation and evenness of the temperature distribution in the drying furnace, the manner (hot-air heater manner) using a hot-air heater is preferable. The blowing direction of the hot air may be air blow approximately in parallel to the feeding direction of the laminate film 1, air blow approximately vertical to the feeding direction of the laminate film 1, that is, downstream air blow, or combination thereof and preferably, in the case of a laminate film 1 having a high remaining amount of the organic solvent in the layer containing an ion conductive polymer of the laminate film 1, if the air blow direction is parallel and opposed to the feeding direction of the laminate film 1, the organic solvent can be removed without considerably deteriorating the surface state of the layer containing an ion conductive polymer of the laminate film 1 and thus it is preferable.

The residence time of the laminate film 1 in the drying furnace means that, with respect to an arbitrary point on the surface of the layer containing an ion conductive polymer of the laminate film 1, the duration from the time when the point comes in the drying furnace to the time when the point comes out the drying furnace. The residence time can mainly be controlled in accordance with the length of the laminate film 1 fed in the drying furnace and the feeding rate of the laminate film 1.

In such a manner that the laminate film 1 is caused to pass through the drying furnace, the organic solvent contained in the layer containing an ion conductive polymer is removed and conversion into a polymer electrolyte membrane intermediate is caused. That is, the laminate film 1 can continuously be converted into the laminate film 2 comprising the polymer electrolyte membrane intermediate and the supporting substrate.

Next, with respect to the method for continuously producing the polymer electrolyte membrane of the present invention, the respective steps will be described separately.

At first, a polymer electrolyte solution is prepared in (i). Herein an organic solvent capable of dissolving the polymer electrolyte may specifically include those capable of dissolving one or more ion conductive polymers to be used and in the case where polymers besides the ion conductive polymers and other components such as additives are used together based on the necessity, those capable of also dissolving these components and giving a polymer electrolyte solution can be used without any particular limitation.

The organic solvent capable of dissolving a polymer electrolyte in the present invention means an organic solvent capable of dissolving the polymer electrolyte in a concentration of 1% by weight or higher based on the resulting polymer electrolyte solution and preferably an organic solvent capable of dissolving the polymer electrolyte in a concentration of 5 to 50% by weight is used.

In the case where two or more ion conductive polymers are used as the polymer electrolyte, an organic solvent capable of dissolving the used polymer electrolytes in the total concentration of 5 to 50% by weight is used. In the case where two or more ion conductive polymers are used or in the case where components other than the ion conductive polymers are used in combination, the loading order at the time of preparing the polymer electrolyte solution is not particularly limited.

The organic solvents may be those capable of preparing the above polymer electrolyte solution and capable of being removed after casting the polymer electrolyte solution onto the supporting substrate. For example, non-protonic polar solvents such as dimethylformamide (DMF), dimethylacetamide (DMAc), N-methyl-2-pyrrolidone (NMP) and dimethyl sulfoxide (DMSO); chlorine type solvents such as dichloromethane, chloroform, 1,2-dichloroethane, chlorobenzene and dichlorobenzene; alcohols such as methanol, ethanol and propanol; and alkylene glycol monoalkyl ethers such as ethylene glycol monomethyl ether, ethylene glycol monoethyl ether, propylene glycol monomethyl ether and propylene glycol monoethyl ether are preferably used. They may be used alone and two or more of the organic solvents may also be mixed for use based on the necessity. Among them, an organic solvent including one solvent or a mixture of two or more solvents selected from DMSO, DMF, DMAc and NMP is preferable since having high solubility of a block copolymer, a preferable ion conductive polymer, described below.

Here, the organic solvent capable of dissolving the above polymer electrolyte is preferable to contain at least one organic solvent having a boiling point of 150°C or higher at 101.3 kPa (1 atmospheric pressure). If an organic solvent having a boiling point lower than 150°C at 101.3 kPa (1 atmospheric pressure) is used alone as the organic solvent

capable of dissolving the polymer electrolyte, such an organic solvent is easy to be evaporated and thus there is a risk of uneven evaporation of the organic solvent from the layer containing an ion conductive polymer and occurrence of uneven appearance defects during the process of transfer of the layer containing an ion conductive polymer obtained by casting onto the supporting substrate to the drying furnace.

The above polymer electrolyte contains at least one ion conductive polymer and the ion conductive polymer is contained preferably 50% by weight, more preferably 70% by weight or higher, and even more preferably 90% by weight or higher in the polymer electrolyte.

The ion conductive polymer is a polymer having an ion-exchange group and means a polymer having an ion-exchange group relevant to ion conductivity and particularly proton conductivity in the case where the polymer is used as an ion conductive membrane for a fuel cell. Examples of those suitable as the ion-exchange group include proton-exchange groups such as a sulfonic acid group ($-SO_3H$), a phosphonic acid group ($-PO_3H_2$), a phosphoric acid group ($-OPO_3H_2$), a sulfonylimido group ($-SO_2-NH-SO_2-$) and a carboxyl group (-COOH) and a sulfonic acid group is particularly preferable. In the production method of the present invention, an ion conductive polymer in which these proton-exchange groups may be partially or entirely exchanged with metal ions or the like to form salts may be used; however it is preferable to use an ion conductive polymer in which the proton-exchange groups are substantially entirely in a free acid state. The ion conductive polymer in which the proton-exchange groups are substantially entirely in a free acid state does not require the operation of converting the proton-exchange groups forming salts into the proton-exchange groups in a free acid state after the production of the polymer electrolyte membrane using the production method of the present invention and therefore, it is advantageous even in the case it is used for a fuel cell.

The introduction amount of the ion-exchange group in the ion conductive polymer is, based on the equivalent number of ion-exchange groups per unit weight of the ion conductive polymer, that is, ion-exchange capacity, preferably 0.5 meq/g to 4.0 meq/g and more preferably 1.0 meq/g to 2.8 meq/g. If the ion-exchange capacity is in this range, it becomes easy to exhibit practical ion conductivity and practical water resistance when the polymer electrolyte membrane is formed using the ion conductive polymer, and in the case where the ion conductive polymer is used for the continuous production method of the present invention, as a separation membrane (an ion conductive membrane) of a fuel cell, a membrane capable of exhibiting these properties to further higher levels can be produced with good productivity.

The ion conductive polymer may also be used by mixing perfluoro sulfonic acid type polymers typified by Nafion (registered trade mark of Du Pont) and hydrocarbon type ion conductive polymers and mixtures thereof and particularly hydrocarbon type ion conductive polymers are preferably used.

Examples of the hydrocarbon type ion conductive polymers include those obtained by introducing proton-exchange groups exemplified above into engineering resins having aromatic rings in the main chains such as polyether ether ketones, polyether ketones, polyether sulfones, polyphenylene sulfides, polyphenylene ethers, polyether ether sulfone, poly(p-phenylenes) and polyimides and widely commercialized resins such as polyethylenes and polystyrenes.

The hydrocarbon type ion conductive polymers are typically those containing no fluorine atom at all, however they may partially contain a fluorine atom. However, from the viewpoint of the cost, if polymers contain substantially no fluorine atom, the polymers have advantage that they are economical as compared with fluoro type ion conductive polymers. More preferably, it is desired that the halogen atom such as a fluorine atom is contained 15 % by weight or less based on elemental weight ratio constituting the ion conductive polymers.

Especially, from the viewpoint of obtaining heat resistance to a high level, the hydrocarbon type ion conductive polymers are those having aromatic rings in the main chains and ion-exchange groups directly or indirectly through another atom or an atom group bonded to the aromatic rings, or those having aromatic rings in the main chains, further optionally having side chains having aromatic rings, and having ion-exchange groups directly bonded to at least one aromatic ring of the aromatic rings constituting the main chains or the aromatic rings of the side chains.

Above all, from the viewpoint of obtaining water resistance to a high level, the hydrocarbon type ion conductive polymers obtained by introducing the ion-exchange groups into the aromatic hydrocarbon type polymers having aromatic rings constituting the main chains are preferable and the hydrocarbon type ion conductive polymers obtained by introducing the ion-exchange groups directly into the aromatic rings constituting the main chains are particularly preferable.

Furthermore, the above hydrocarbon type ion conductive polymers are preferably copolymers each containing a structure unit having an ion-exchange group and a structure unit having no ion-exchange group, obtained by combining these structure units and having the ion-exchange capacity in the above range. Copolymerization modes of such copolymers may be random copolymerization, block copolymerization, graft copolymerization, alternating copolymerization, or combination of these copolymerization modes.

Preferable examples of the structure unit having an ion-exchange group are those selected from the following (1a) to (4a) and may be ion conductive polymers containing two or more these units.

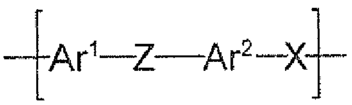

(1a)

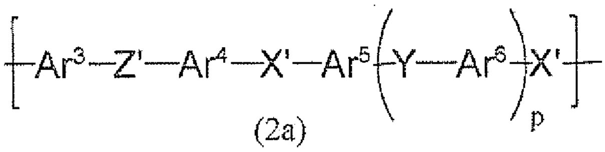

(2a)

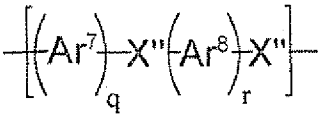

(3a)

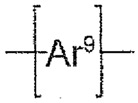

(4a)

(wherein, $Ar^1$ to $Ar^9$ each independently denote a divalent aromatic group having an aromatic ring constituting the main chain and optionally further having a side chain having an aromatic ring and having an ion-exchange group directly bonded to at least either the aromatic ring constituting the main chain or the aromatic ring in the side chain; Z and Z' each independently denote -CO- or $-SO_2-$; X, X', and X" each independently denote -O- or -S-; Y denotes a direct bond or a group defined by the following formula (100); p denotes 0, 1, or 2; and q and r each independently denote 1, 2, or 3)

Further, preferable examples of the structure unit having no ion-exchange group are those selected from the following (1b) to (4b) and may be the hydrocarbon type ion conductive polymers containing two or more these units.

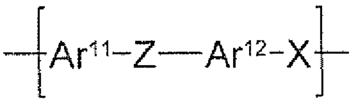

(1b)

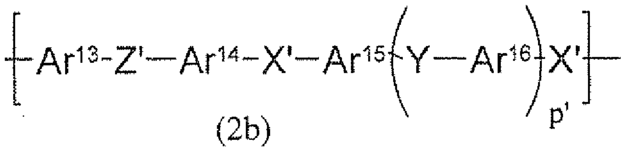

(2b)

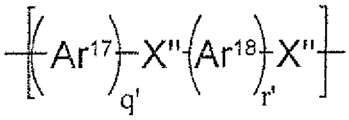

(3b)

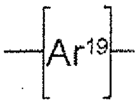

(4b)

(wherein, $Ar^{11}$ to $Ar^{19}$ each independently denote a divalent aromatic group optionally having a substituent group as a side chain; Z and Z' each independently denote -CO- or $-SO_2-$; X, X', and X" each independently denote -O- or -S-; Y denotes a direct bond or a group defined by the following formula (100); p' denotes 0, 1, or 2; and q' and r' each independently denote 1, 2, or 3.)

The ion conductive polymer to be used for the present invention is preferably a copolymer containing, as structure units, a structure unit having an ion-exchange group one or more of the above formulas (1a) to (4a) and a structure unit having no ion-exchange group of one or more of the above formulas (1b) to (4b).

$Ar^1$ to $Ar^9$ in the formulas (1a) to (4a) denote a divalent aromatic group. Examples of the divalent aromatic group include divalent monocyclic aromatic groups such as 1,3-phenylene and 1,4-phenylene; divalent condensed ring type aromatic groups such as 1,3-naphthalenediyl, 1,4-naphthalenediyl, 1,5-naphthalenzediyl, 1,6-naphthalenediyl, 1,7-naphthalenediyl, 2,6-naphthalenediyl, and 2,'7-naphthalenediyl; and hetero aromatic groups such as pyridinediyl, quinoxalinediyl, and thiophenediyl. A divalent monocyclic aromatic group is preferable.

Further, $Ar^1$ to $Ar^9$ may be substituted with a fluorine atom, an optionally substituted alkyl group having 1 to 10 carbon atoms, an optionally substituted alkoxy group having 1 to 10 carbon atoms, an optionally substituted aryl group having 6 to 18 carbon atoms, an optionally substituted aryloxy group having 6 to 18 carbon atoms, and an optionally substituted acryl group having 2 to 20 carbon atoms.

$Ar^1$ and/or $Ar^2$ in the structure unit defined by the formula (1a), one or more of $Ar^1$ to $Ar^3$ of the structure unit defined by the formula (2a), $Ar^7$ and/or $Ar^8$ in the structure unit defined by the formula (3a), and $Ar^9$ in the structure unit

defined by the formula (4a) have at least one ion-exchange group each in the aromatic rings constituting the main chains. As the ion-exchange group, a sulfonic acid group is preferable as described above.

Preferable examples of the above substituent group are as follows.

Examples of the alkyl group include a methyl group and an ethyl group; examples of the alkoxy group include a methoxy group and an ethoxy group; examples of the aryl group include a phenyl group and a naphthyl group; examples of the aryloxy group include a phenoxy group and a naphthyloxy group; and examples of the acyl group include an acetyl group and a propionyl group. As the above substituent group, those having less carbon atoms constituting them are preferable.

$Ar^{11}$ to $Ar^{19}$ in the formulas (1b) to (4b) denote a divalent aromatic group. Examples of the divalent aromatic group may include divalent monocyclic aromatic groups such as 1,3-phenylene and 1,4-phenylene; divalent condensed ring type aromatic groups such as 1,3-naphthalenediyl, 1,4-naphthalenediyl, 1,5-naphthalenediyl, 1,6-naphthalenediyl, 1,7-naphthalenediyl, 2,6-naphthalenediyl, and 2,7-naphthalenediyl; and hetero aromatic groups such as pyridinediyl, quinoxalinediyl, and thiophenediyl. A divalent monocyclic aromatic group is preferable.

Further, $Ar^{11}$ to $Ar^{19}$ may have a substituent group as described above and specific examples of the substituent group are the same as described as the substituent groups for $Ar^1$ to $Ar^9$.

The ion conductive polymer to be employed in the present invention may include a structure unit having an ion-exchange group and a structure unit having no ion-exchange group and the copolymerization mode may be any one of the above modes; however, particularly, block copolymerization or graft copolymerization is preferable. That is, more preferable are block copolymers or graft copolymers having at least one block (A) comprising mainly the structure unit selected from the formulas (1a) to (4a) and having an ion-exchange group and at least one block (B) comprising mainly the structure unit selected from the formulas (1b) to (4b) and having substantially no ion-exchange group.

The graft polymers mean polymers with a structure having the block (B) as a side chain of the molecular chain comprising the block (A) or polymers with a structure having the block (A) as a side chain of the molecular chain comprising the block (B).

The above block copolymers may be those having one or more blocks (A) and blocks (B), respectively, however may be those having two or more either block, or two or more both blocks.

With respect to the block (A), "a block having an ion-exchange group" is a block having 0.5 or more on average of ion-exchange groups based on the number of the ion-exchange groups per one repeating unit constituting the block and preferably a block containing 1.0 or more on average of ion-exchange groups per one repeating unit. Further, with respect to the block (B), "block having substantially no ion-exchange group" is a block having less than 0.5 on average of ion-exchange groups based on the number of the ion-exchange groups per one repeating unit constituting the block; preferably a block containing 0.1 or less on average of ion-exchange groups per one repeating unit; and even more preferably 0.05 or less.

In the case where the above ion conductive polymer is a proper block copolymer or a graft copolymer, the polymerization degree m of the block (A) having an ion-exchange group is preferably 5 or higher, more preferably 5 to 1000, and even more preferably 10 to 500. On the other hand, the polymerization degree n of the block (B) having substantially no ion-exchange group is preferably 5 or higher, more preferably 5 to 1000, and even more preferably 10 to 500. If these polymerization degrees are within the ranges, the resulting polymer electrolyte membrane tends to sufficiently exhibit the properties of the respective blocks and the ion conductivity and water resistance are improved to further higher levels by the production method of the present invention and production of the respective blocks advantageously becomes easy. In consideration of the easiness in terms of the production, among them, a block copolymer is particularly preferable.

In the case where the ion conductive polymer employed in the present invention is a preferable block copolymer or graft copolymer, those capable of giving a membrane with a microphase-separated structure when the copolymer is formed in the membrane. Herein, the microphase-separated structure means the structure in which micro-scale phase separation in size order of molecular chains is generated because the block copolymer comprises blocks with different chemical characteristics bonded by chemical bonds. For example, in the case of observation with a transmission electron microscope (TEM), the structure refers to a structure in which a fine phase (micro-domain) including density of the block (A) having an ion-exchange group higher than that of the block (B) having substantially no ion-exchange group and a fine phase (micro-domain) including density of the block (B) having substantially no ion-exchange group higher than that of the block (A) having an ion-exchange group in a mixed state and the structure has several nm or several hundred nm of the domain width of the respective micro-domain structures, that is, constant cycle length. Those having a 5 nm to 100 nm micro-domain structure are preferable.

Examples of the preferable block copolymer include such as block copolymers having aromatic polyether structures and constituting with a block having an ion-exchange group and a block having substantially no ion-exchange group as described in, for example, JP-A Nos. 2005-126684 and 2005-139432 and block copolymers including polyarylene blocks having an ion-exchange group as described in International Publication WO 2006/95919.

Examples of more preferable block copolymer are those having one or more blocks comprising the structure

units having ion-exchange groups selected from the above (1a) to (4a) and one or more blocks comprising the structure units having substantially no ion-exchange groups selected from the above (1b) to (4b), respectively, and particularly preferable examples include those having the following blocks in combination as shown in the following Table 1.

Table 1

| Block copolymer | Structure unit constituting block having ion-exchange groups | Structure unit constituting block having substantially no ion-exchange group |
|---|---|---|
| <a> | (1a) | (1b) |
| <b> | (1a) | (2b) |
| <c> | (2a) | (1b) |
| <d> | (2a) | (2b) |
| <e> | (3a) | (1b) |
| <f> | (3a) | (2b) |
| <g> | (4a) | (1b) |
| <h> | (4a) | (2b) |

Further, preferable examples are block copolymers constituted with blocks in combination as described in <c>, <d>, <e>, <g>, and <h> and particularly preferable examples are block copolymers constituted with blocks in combination as described in <g> and <h>.

Specifically preferable block copolymers include, for example, block copolymers with the following structures and having s sulfonic acid group as a preferable ion-exchange group. In addition, the term "block" below means that one or more blocks (A) having ion-exchange groups and one or more blocks (B) having substantially no ion-exchange group are included respectively, and the copolymerization mode is block copolymerization. In the following examples of the block copolymer, formation obtained by directly bonding the block having an ion-exchange group and the block having substantially no ion-exchange group are exemplified; however block copolymers obtained by bonding such blocks to each other through a proper atom or atomic group may also be included. The reference characters n and m in the formulas denote the polymerization degrees of the respective blocks as described above.

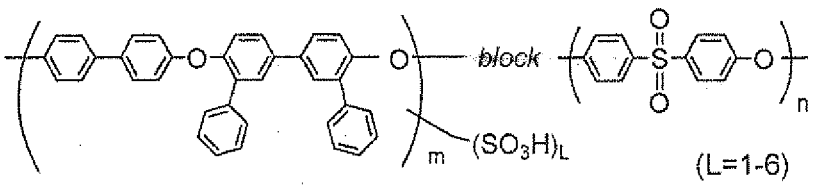
(1)

(L=1-6)

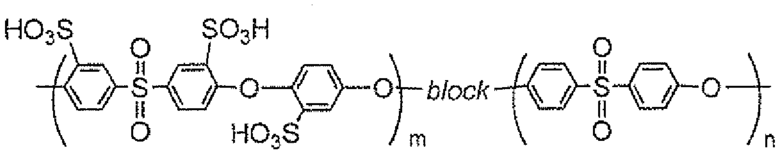
(2)

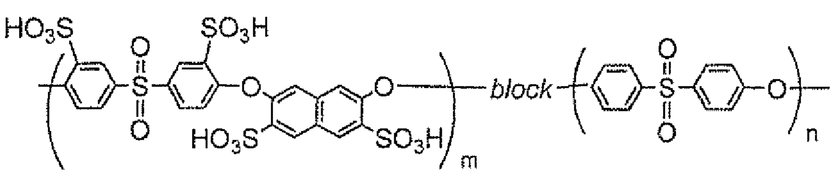
(3)

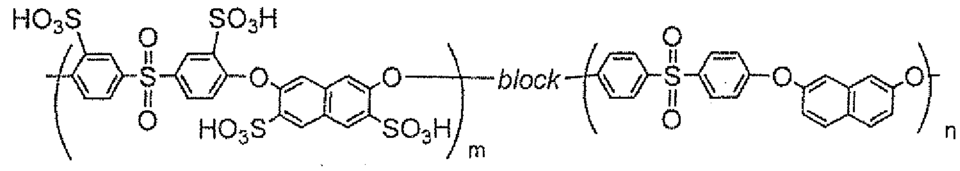

(4)

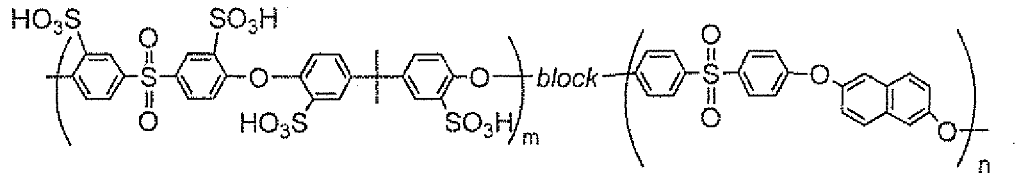

(5)

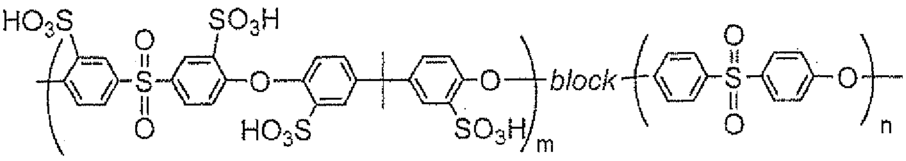

(6)

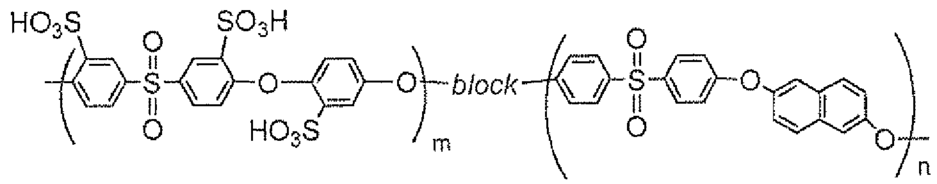

(7)

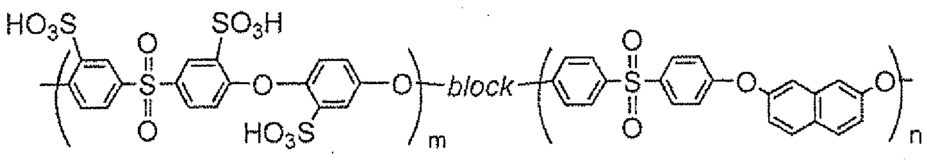

(8)

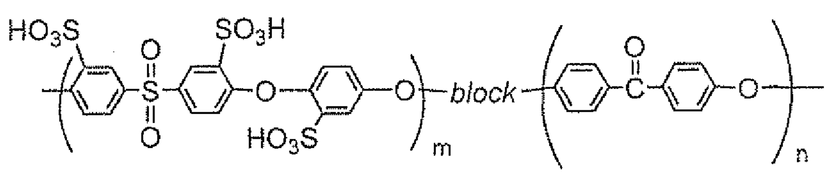

(9)

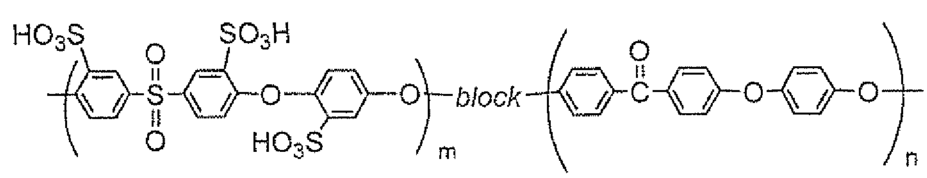

(10)

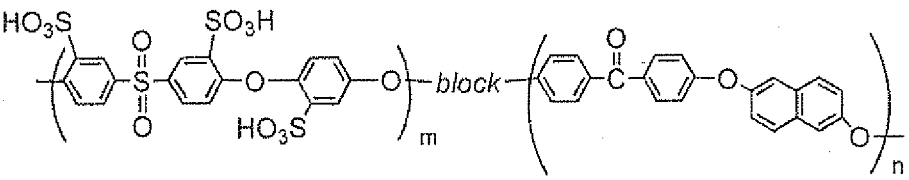

(11)

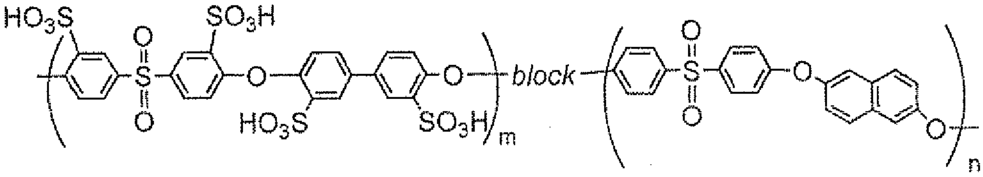

(12)

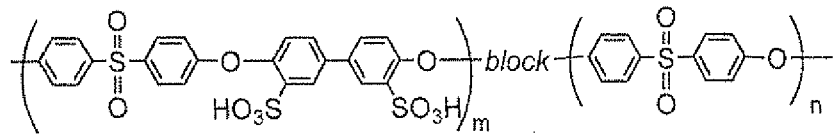

(13)

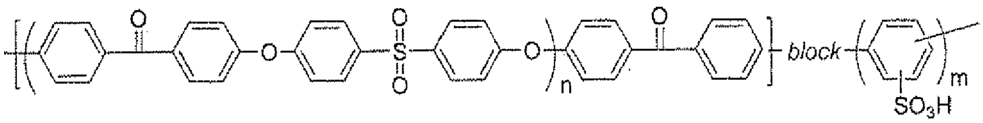

(14)

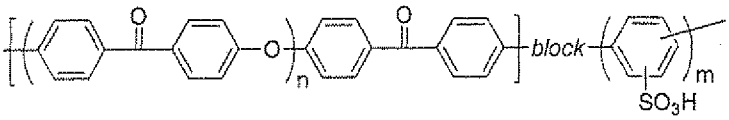

(15)

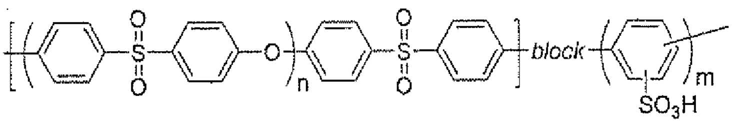

(16)

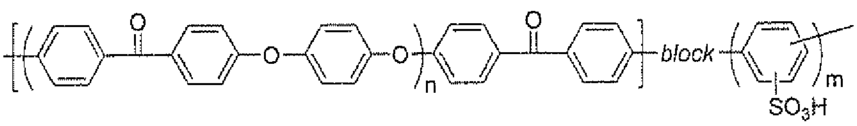

(17)

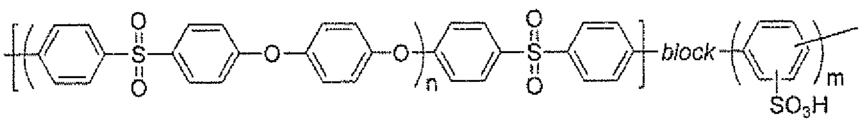

(18)

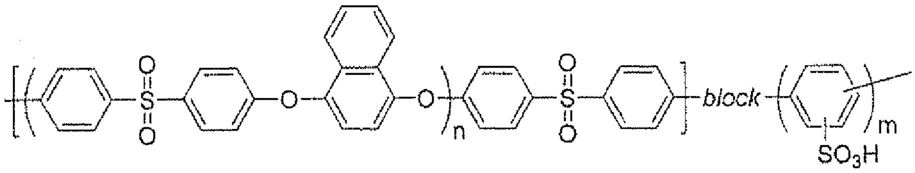

(19)

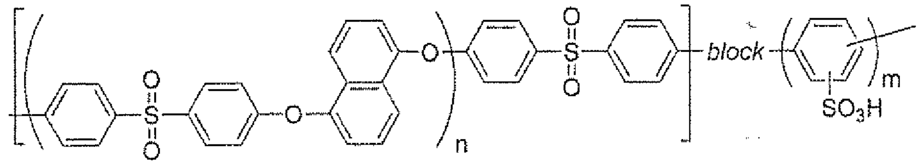

(20)

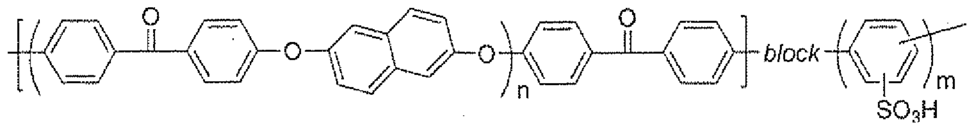

(21)

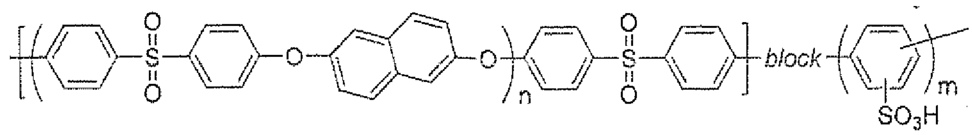

(22)

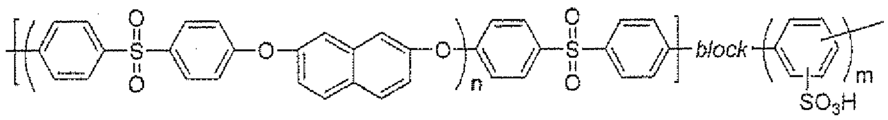

(23)

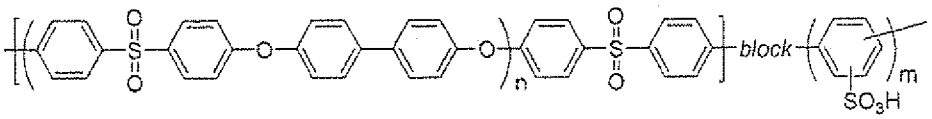

(24)

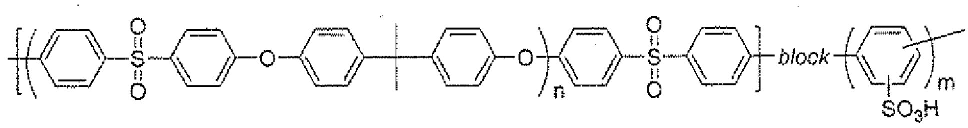

(25)

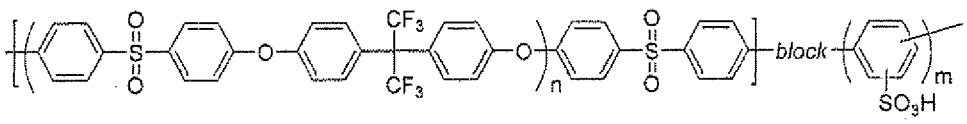

(26)

Among the block copolymers described above, those including a block defined by the following formula (4a') as the block (A) having an ion-exchange group are preferable.

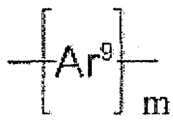

(4a')

(wherein, $Ar^9$ and m are defined the same as described above.)

It is preferable that the ion-exchange group existing in $Ar^9$ is directly bonded to the aromatic ring constituting the main chain and more preferable that a proton-exchange group is bonded. As the ion-exchange group, a sulfonic acid group is particularly preferable as described above.

Particularly preferable examples among the block defined by the formula (4a') are those defined by the following formula.

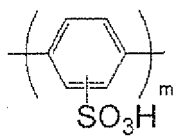

(In the formula, m denotes the same as described above).

From such a viewpoint, block copolymers shown in (14) to (26) are preferable and particularly, (16), (18), (22), (23), (24) and (25) are preferable.

Further, the molecular weight of the ion conductive polymer is preferably 5000 to 1000000 and more preferably 15000 to 400000 based on the number average molecular weight in terms of styrene.

The polymer electrolyte membrane produced by the present invention may contain an additive other than the ion conductive polymer as described above. Preferable additives are stabilizers for increasing the chemical stability such as oxidation resistance and radical resistance. Examples of the stabilizers are additives exemplified in JP-A Nos. 2003-201403, 2003-238678, and 2003-282096. Alternatively, phosphonic acid group-containing polymers defined by the following formulas described in JP-A Nos. 2005-38834 and 2006-66391 may be contained as the stabilizers.

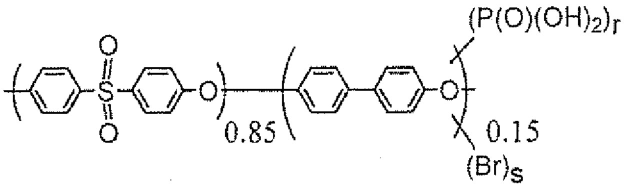

(r = 1 to 2.5; s = 0 to 0.5; and the numerals attached to the structure units denote the mole ratio of the structure units.)

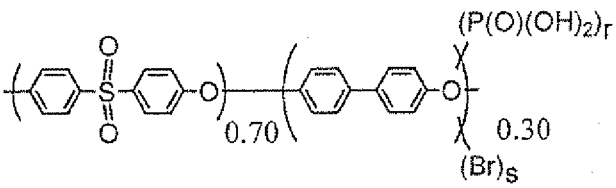

(r = 1 to 2.5; so to 0.5; and the numerals attached to the structure units denote the mole ratio of the structure units.) In the above formulas, the description, "-$(P(O)(OH)_2)_r$" and "-$(Br)_s$" mean that r in number of phosphonic acid groups exist on average and that s in number of bromo groups exist on average per one biphenyleneoxy unit.

The content of the chemical stabilizers to be added is preferably within buy weight in the total weight, and if it

is in this range, the characteristics such as ion conductivity and water resistance of the polymer electrolyte membrane can be sufficiently maintained and the effect of the chemical stabilizers can easily be exhibited and therefore, it is preferable.

Next, with respect to the steps defined as (ii) and (iii), a first embodiment of the present invention will be described.

Fig. shows a schematic view of main parts of the first embodiment. A polymer electrolyte solution 1 obtained in the preparing step (i) is arranged in a coating apparatus 2 and the polymer electrolyte solution 1 is casted onto a supporting substrate 10 continuously fed from a feeding bobbin 3 with the coating apparatus 2 to continuously form a laminate film 1 (20) comprising the supporting substrate and a layer containing an ion conductive polymer. Herein, as a means for feeding the supporting substrate 10, a manner of feeding a long supporting substrate to the coating apparatus 2 by forcibly rotating the feeding bobbin 3 installed in a bobbin, or a manner of pulling the supporting substrate 10 into the coating apparatus 2 by forcibly rotating a winding roll 5 for winding a laminate film 2 comprising a polymer electrolyte membrane intermediate passed through a drying furnaces and the supporting substrate, or a manner of preparing a guide roll 4 for feeding the supporting substrate in a middle of the continuous treatment for the steps defined (i) to (iii) of the present invention and forcibly rotating the guide roll 4.

Particularly, a manner of continuously feeding the supporting substrate 10 held in a form of being wound up by the feeding bobbin 3 is preferable and moreover, it is particularly preferable if the feeding bobbin 3 is detachable and has a function of stably and continuously supplying the supporting substrate. In addition, during the time of supplying the supporting substrate 10 to the coating apparatus 2, it is preferable to apply tensile force of about 10 to fizz so as not to loosen the supporting substrate 10 or the like and the tensile force can properly be optimized in accordance with the type of the supporting substrate to be used.

In the coating apparatus 2, the above polymer electrolyte solution 1 is casted onto the fed supporting substrate 10 by employing so-called solution casting method. The means for casting include various means such as a roller coating method, a spray coating method, a curtain coating method, a slot coating method and a screen printing method and preferably a means for forming a shape with a prescribed width and thickness by molding dies, so-called dies, having a specified clearance.

In the above manner, the laminate film 1 (20) in which the layer containing an ion conductive polymer is formed on the fed supporting substrate is continuously formed. Here, "the layer containing an ion conductive polymer" means a layer containing one or more ion conductive polymers contained in the used polymer electrolyte solution, additives used based on the necessity, and organic solvents remaining without being evaporated at the time of casting.

The thickness of the layer containing an ion conductive polymer in the laminate film 1 obtained by the solution casting method is preferably determined in a manner that the thickness of the finally obtaining polymer electrolyte membrane can be 10 to 300 μm and the thickness of the layer containing an ion conductive polymer can be controlled by adjusting the feeding rate of the supporting substrate, the solid matter concentration of the polymer electrolyte solution ("solid matter " means a matter remaining after removal of the volatile organic solvent from the polymer electrolyte solution and "solid matter concentration" means the weight concentration of the solid matter based on the entire amount of the polymer electrolyte solution), and the application amount of the polymer electrolyte solution in the coating apparatus.

The supporting substrate 10 refers to a substrate having mechanical strength sufficient for withstanding the tensile force applied at the time of continuous membrane formation and solvent resistance to the polymer electrolyte solution 1 and preferably capable of being held as a roll and durable without being cracked under outer force such as curving to a certain extent.

Further, as the supporting substrate, those having heat resistance and size stability durable to drying conditions for removing the organic solvent from the layer containing an ion conductive polymer are preferable. Further, with respect to the laminate film 1 (20), substrates capable of avoiding firm adhesion between the layer containing an ion conductive polymer and the supporting substrate and peelable from the layer are preferable. Herein, "having heat resistance and size stability" means that no thermal deformation is caused even in the heating treatment for the solvent removal after casting the above polymer electrolyte solution. Further, "having solvent resistance" means that the substrate itself is not substantially dissolved by the organic solvent constituting the polymer electrolyte solution. Furthermore, "having water resistance" means that the substrate itself is not substantially dissolved in an aqueous solution with pH of 4.0 to 7.0. Furthermore, "having solvent resistance" and "having waster resistance" means the concept including that chemical deterioration is not caused by solvents or water and that no swelling or shrinkage is caused and the size stability is thus excellent.

As the above supporting substrate, a supporting substrate in which the surface to be casted is formed by a resin is suitable and generally a resin film is employed.

Examples of the supporting substrate comprising a resin film include polyolefin type films, polyester type films, polyamide type films, polyimide type films, fluoro resin type films and the like. Among them, since excellent in such as heat resistance, size stability, and solvent resistance, polyester type films and polyimide type films are preferable. Examples of the polyester type films include such as polyethylene terephthalate, polyethylene naphthalate, polybutylene terephthalate and aromatic polyesters and among them, polyethylene terephthalate are industrially preferable in terms

of not only the above properties but also the wide availability and cost.

The supporting substrate may be subjected to surface treatment capable of changing the wet ability of the supporting substrate surface in accordance with the uses. Herein, the treatment capable of changing the wet ability of the supporting substrate surface may include common techniques such as treatment for hydrophilicity including corona treatment, plasma treatment or the like and treatment for hydrophobicity including fluorination treatment.

The laminate film 1 formed continuously as described above is led to a drying furnace 6 for performing the drying step (iii).

The drying furnace is set at a temperature in a preferable range of 40 to 150°C as described above. The temperature range is preferably 50 to 140°C.

The volatile component (mainly the organic solvent used for the above polymer electrolyte solution) existing in the layer containing an ion conductive polymer of the laminate film 1 is dried and removed by passing the laminate film 1 through the drying furnace set at the prescribed drying temperature and accordingly, a laminate film 2 (30) in which the polymer electrolyte membrane intermediate is laminated on the supporting substrate can continuously be obtained. The "polymer electrolyte membrane intermediate" in the laminate film 2 contains one or more ion conductive polymers contained in the polymer electrolyte solution obtained in the preparing step (i), additives used based on the necessity, and organic solvents remaining without being removed by the drying treatment in the drying furnace.

The amount of the organic solvent remaining in the polymer electrolyte membrane intermediate of the laminate film 2 immediately after the laminate film 2 comes out of the drying furnace is adjusted to be 40% by weight or less in the polymer electrolyte membrane intermediate of the laminate film 2. If the polymer electrolyte membrane is obtained by a method described below from the polymer electrolyte membrane intermediate obtained in such a manner, the polymer electrolyte membrane is provided with ion conductivity (particularly proton conductivity) and water absorption size stability at high levels. The amount of the remaining organic solvent in the polymer electrolyte membrane intermediate of the laminate film 2 is preferably 30% by weight or less and more preferably 20% by weight or less. The water absorption size stability is further improved by further decreasing the amount of the remaining organic solvent as described above. Furthermore, if the amount of the remaining organic solvent is decreased to 10% by weight or lower, in the case of washing the laminate film 2 obtained through the continuous production method of the present invention, the time for the washing step can advantageously be shortened.

If the amount of the organic solvent remaining in the polymer electrolyte membrane intermediate is more than 40% by weight, although the ion conductivity of the resulting polymer electrolyte membrane can be maintained, the water absorption size stability is considerably worsened and in addition, the strength of the polymer electrolyte membrane itself tends to be insufficient and in the case where the strength decrease is significant, when the laminate film 2 is to be wound using a winding bobbin, there may also be a risk that the polymer electrolyte membrane intermediate is torn.

The residence time in the drying furnace in the drying step is within 50 minutes, preferably within 40 minutes, and more preferably within 30 minutes. On the other hand, the minimum value of the residence time can properly be optimized to an extent that the amount of the remaining organic solvent in the polymer electrolyte membrane intermediate can be adjusted to 40% by weight or less and in terms of a practical range, it is preferably 5 minutes or longer, more preferably 10 minutes or longer, and even more preferably 15 minutes or longer. Further, in the case where the organic solvent is to be removed to an extent that the amount of the remaining organic solvent in the polymer electrolyte membrane intermediate becomes 40% by weight or less under a condition of extremely short residence time, the appearance defects such as unevenness of the surface of the polymer electrolyte membrane intermediate tends to be generated and the quality and yield tends to be decreased.

On the other hand, if the residence time is longer than 50 minutes, the ion conductivity of the resulting polymer electrolyte membrane is extremely lowered. The reason for this is not clear; however it is assumed that the ion conduction path in the thickness direction of the resulting polymer electrolyte membrane tends to be worsened and in the case where the microphase-Separatecl structure suitable as the ion conductive polymer is formed, it is assumed that such a microphase-separated structure is in a form of inhibiting the ion conductivity. Further, excess residence time also causes a problem of productivity decrease. According to the above description, the assumed mechanism for producing the polymer electrolyte membrane which satisfies the ion conductivity and the water absorption size stability at high levels by the production method of the present invention is described, and such effects exhibited by controlling the passing time in the drying furnace and the amount of the remaining organic solvent in the polymer electrolyte membrane intermediate of the laminate film 2 passed through the drying furnace cannot be accomplished by a conventional method for producing a polymer electrolyte membrane and it is based on the present inventors' own findings.

The present invention is based on the findings that the resulting polymer electrolyte membrane can be provided with ion conductivity and water resistance at high levels by adjusting the amount of the remaining organic solvent in the polymer electrolyte membrane intermediate of the laminate film 2 and the residence time (passing time) in the drying furnace for obtaining the laminate film 2 in the above range and in order to obtain further higher ion conductivity, it is preferable that the drying furnace 6 has a heating zone at a temperature of 60 to 130°C and it is preferable that the amount of the remaining organic solvent in the polymer electrolyte membrane intermediate of the laminate film 2 passed

through the heating zone is adjusted to 40% by weight or less. The ion conductivity of the resulting polymer electrolyte membrane tends to become good by adjustment as described above.

A method for providing the above heating zone in the drying furnace can be proper and preferable means in accordance with the uniformity of the temperature distribution and set temperature relevant to the type of the drying furnace to be employed. Specifically, if a correlation of the set temperature in the drying furnace and the temperature on the film fed substantially in the drying furnace is previously determined by continuously feeding a test film equipped with temperature observation means such as a thermocouple in the drying furnace, a preferable heating zone can be arranged in the drying furnace based on the difference between the above set temperature and the temperature of the continuous film fed in the drying furnace.

In the case where the drying furnace is a preferably hot-air heater type, since the difference of the temperature distribution in the drying furnace from the set temperature is within a range of about ±3°C, if the range of the temperature distribution in the drying furnace is controlled to be 60 to 130°C in consideration of the difference, passing in the drying furnace becomes equal to passing the above heating zone.

The continuous production method of the present invention can be carried out as described above; however a manner using a plurality of drying furnaces may also be employed and the present invention with such a manner may be described as a second embodiment with reference to Fig. 2.

Fig. 2 is a schematic drawing showing main parts of the continuous production method in the case of using three drying furnaces (6C, 6B, 6A from the upstream side of the supporting substrate feeding direction). At least one drying furnace among three drying furnaces may have a set temperature in a preferable range of 40 to 150°C and the residence time of the laminate film 1 (20) passing through the drying furnace at the set temperature may be adjusted to 50 minutes or shorter and the remaining organic solvent concentration in the polymer electrolyte membrane intermediate of the laminate film 2 after the laminate film 2 passing through the drying furnace at the set temperature may be adjusted to 40% by weight or less. In the case where there are a plurality of drying furnaces at a set temperature of 40 to 150°C, the total of the respective residence times in a plurality of the drying furnaces may be adjusted to 50 minutes or shorter and the remaining organic solvent concentration of the laminate film 2 after the laminate film 2 passing through the drying furnace in the most downstream may be adjusted to 40% by weight or lower. If the set temperature of the drying furnace 6C and the drying furnaces 6B in Fig. 2 is 40 to 150°C, the total of residence time of the drying furnace 6C and residence time of the drying furnace 6B may be adjusted to 50 minutes or shorter and the amount of the remaining organic solvent in the polymer electrolyte membrane intermediate of the laminate film 2 (30A) which passes through the drying furnace 6B may be adjusted to 40% by weight or less. In this case, the set temperature of the drying furnace 6A in which the set temperature is not 40 to 150°C is preferably lower than 40°C.

As described above, the laminate film 2 obtained through the steps (i) to (iii) may be subjected to acid treatment with an acid solution or washing with a washing solvent. Herein, the acid treatment can be carried out by immersion in an aqueous acid solution obtained by adjusting an acid such as hydrochloric acid and sulfuric acid to 0.5 to N. A washing solvent to be used for washing may be a solvent containing mainly water (water-containing solvent) and generally, a solvent containing 90% by weight or higher of water is preferable. Such washing may be a manner of washing by continuously immersing the laminate film 2 which is produced by the continuous production method of the present invention, that is, the laminate film 2 which passes through the drying furnaces, in a washing tank containing the washing solvent, or washing may be carried out by once winding the laminate film 2 passed through the drying furnaces on a winding bobbin (5 in Figs. 1 and 2) and thereafter taking the winding bobbin on which the laminate film 2 is wound out of the production apparatus for carrying out the continuous production method of the present invention, and then newly arranging the bobbin in a washing apparatus for carrying out the washing. As the washing apparatus, an apparatus having a continuous washing manner for washing by continuously feeding the laminate film 2 from the winding bobbin on which the laminate film 2 is wound, continuously supplying the laminate film 2 to the washing tank; or a batch washing manner for cutting the laminate film 2 fed from the winding bobbin on which the laminate film 2 is wound and washing the obtained sheets of the laminate film 2; or a manner of combining the continuous washing manner and the batch washing manner may be used. Here, the above continuous washing manner or batch washing manner is described for washing the laminate film 2; however the washing may be for washing of the polymer electrolyte membrane intermediate obtained by peeling the supporting substrate from the laminate film 2 and in this case, if "polymer electrolyte membrane intermediate" is replaced with "laminate film 2", washing can easily be carried out in the same manner.

The washing of the laminate film 2 is described so far and the washing apparatus is preferably prepared separately from the production apparatus for carrying out the continuous production method of the present invention, in terms of the operation property in the washing and easiness of the process control and in the continuous production method of the present invention, the laminate film 2 is preferably wound once on the winding bobbin, that is, a winding step for winding the laminate film 2 obtained in the step (iii) on a winding core is preferably be added in the continuous production method.

The polymer electrolyte membrane can be obtained by removing the supporting substrate from the laminate film 2 or from the laminate film 2 which is washed with a water-containing solvent based on the necessity. The supporting

substrate may be removed generally by peeling it from the laminate body.

The thickness of the polymer electrolyte membrane in the present invention is preferably, as described above, 10 to 300 μm. If the membrane has a thickness of 10 μm or thicker, the practical strength becomes excellent and thus it is preferable and if the membrane has a thickness of 300 μm or thinner, the membrane resistance is lowered and the characteristics of electrochemical devices tend to be improved and thus it is preferable.

It is expected that the polymer electrolyte membrane obtained by the present invention is used in various fields.

For example, the polymer electrolyte membrane of the present invention is preferable as an ion conductive membrane of electrochemical devices such as fuel cells. Since having high proton conductivity and excellent water absorption size stability, this polymer electrolyte membrane has high utility value as an electrolyte membrane for a fuel cell.

In the case where the polymer electrolyte membrane is used as the electrolyte membrane for a fuel cell, it can be expected that excellent handling property besides the above properties and an effect of easy forming of an electrode catalyst layer with desired form and size can be provided.

Accordingly, the polymer electrolyte membrane produced by the production method of the present invention becomes an industrially advantageous membrane as a polymer electrolyte membrane for a high functional polymer electrolyte fuel cell.

Next, a fuel cell using the membrane of the present invention will be described.

In the case where washing such as water washing is carried out for the polymer electrolyte membrane, before assembly of a fuel cell, it is preferable to remove water contained in the polymer electrolyte membrane by drying treatment based on the necessity.

The fuel cell of the present invention can be produced by joining catalysts and conductive substances as current collectors to both surfaces of the proton conductive polymer electrolyte membrane.

Herein, as the catalysts, those capable of activating redox reaction of hydrogen or oxygen may be employed without any limitation and conventionally known components can be employed, however, fine particles of platinum or platinum-based alloys are preferably used. The fine particles of platinum or platinum-based alloys are used and preferably used while being supported on granular or fibrous carbon such as activated carbon and graphite.

Further, the platinum supported on carbon is mixed with an alcohol solution of a perfluoroalkyl sulfonic acid resin as a polymer electrolyte to gave a paste, which is applied to a gas diffusion layer and/or polymer electrolyte membrane and dried to form catalyst layers. As a specific method, conventionally known methods such as methods described in J. Electrochem. Soc.: Electrochemical Science and Technology, 1988, 135(9), 2209 are exemplified.

Herein, the proton conductive polymer electrolyte of the present invention is used in form of a catalyst composition in place of a perfluoroalkylsulfonic acid resin as the polymer electrolyte.

With respect to the conductive substances as current collectors, conventionally known materials can also be employed and porous carbon woven fabrics, carbon nonwoven fabrics, or carbon paper is preferable for efficient transfer of raw materials gases to the catalyst.

The fuel cell produced in this manner can be used in various modes using hydrogen gas, reformed hydrogen gas, or methanol as a fuel.

The above description illustrates preferred embodiments of the present invention, however, the preferred embodiments of the present invention disclosed above are illustration only and the scope of the present invention is not limited to the illustrated embodiments. The scope of the present invention is shown by the claims and further includes all alternation within the meaning and scope of the description and equivalence of the claims.

Hereinafter, the present invention will be described with reference to examples; however, it is not intended that the present invention be limited to the illustrated examples. Physical property measurement methods employed in examples are described below.

(Measurement of ion exchange capacity)

A polymer electrolyte membrane to be subjected toe measurement was dried until the membrane had a constant weight measured using a halogen water meter set at a heating temperature of 105°C to determine the dry weight. Next, being immersed in 5 mL of an aqueous solution of 0.1 mol/L sodium hydroxide, the polymer electrolyte membrane was left for 2 hours after 50 mL of ion exchanged water was added. Thereafter, 0.1 mol/L of hydrochloric acid was gradually added to the solution in which the polymer electrolyte membrane was immersed to carry out titration, and then the neutralization point was determined. The ion exchange capacity (unit: meq/g, hereinafter referred to as "IEC") of the polymer electrolyte membrane was calculated from the dry weight of the polymer electrolyte membrane and the amount of hydrochloric acid used for the neutralization.

(Measurement of remaining organic solvent concentration)

The measurement of the concentration of the remaining organic solvent (amount of residual solvent) capable

of dissolving the polymer electrolyte and remaining in each polymer electrolyte membrane intermediate was carried out as following.

In the examples, the amount of the residual solvent in each polymer electrolyte membrane intermediate was measured after previously dissolving the polymer electrolyte membrane intermediate in dimethylformamide. GC-MS apparatus: QP-5000 (manufactured by Shimadzu Corporation)

Analysis method: A calibration curve was produced while plotting the set concentrations of standard solutions (mg/L) in the abscissa axis and the peak surface area values in the ordinate axis. The amount of the residual solvent in the polymer electrolyte membrane intermediate was calculated according to the following calculation expression.

Amount of residual solvent (ppm) = (Peak surface area value - y intercept of the calibration curve) / Slope of the calibration curve × Amount of sample-dissolved solution (mL) / Weighed amount of the polymer electrolyte membrane (g)

The remaining organic solvent concentration in the layer containing an ion conductive polymer in the laminate film 1 was also measured in the same manner as that of the polymer electrolyte membrane intermediate.

(Measurement of proton conductivity)

Herein, the proton conductivity means proton conductivity in the thickness direction and at first resistance value per unit surface area measured along the thickness direction by alternating current impedance method in 1 mol/L of sulfuric acid at 23°C was calculated and the cell was changed to a carbon cell in the resistance value method described in the following document and without using a platinum black-bearing platinum electrode, the terminals of an impedance measurement apparatus were directly connected to the cell to prepare a cell.

Each polymer electrolyte membrane was set in the cell to measure the resistance value and thereafter, the resistance value was again measured after the polymer electrolyte membrane was removed and the membrane resistance was calculated from the difference between both values. As the solution brought into contact with both sides of the polymer electrolyte membrane, 1 mol/L of diluted sulfuric acid was employed. The proton conductivity was calculated from the thickness at the time of immersion in the diluted sulfuric acid and the resistance value.

(Document for resistance value measurement method: Desalination 147 (2002) 191-196, New Experimental Chemistry Lecture 19 (Shinjikken Kagaku Koza 19), Polymer Chemistry (II) p. 992 (edited by The Chemical Society of Japan, published by Maruzen).

(Measurement of in-plane size alteration rate)

Each polymer electrolyte membrane was cut out into a square shape and after the obtained membrane was immersed in water at 80°C, length Lw of one side was measured immediately after the membrane was taken out. Thereafter, the membrane was dried out until the membrane was in the equilibrium water absorption state in atmosphere of 23°C and relative humidity of 50% and then length Ld of the same one side was measured. Using these values, the water absorption size alteration rate was calculated according to the expression of 100 × (Lw - Ld)/Ld. The alteration rates in the TD direction and MD directions, respectively, were measured and the average value was defined as the in-plane size alteration rate.

(Synthesis Example 1)

Under argon atmosphere, 142.2 parts by weight of DMSO, 55.6 parts by weight of toluene, 5.7 parts by weight of sodium 2,5-dichlorobenzenesulfonate, 2.1 parts by weight of the following chlorine-terminated polyether sulfone (Sumikaexcel PES 5200P, manufactured by Sumitomo Chemical Co., Lid.),

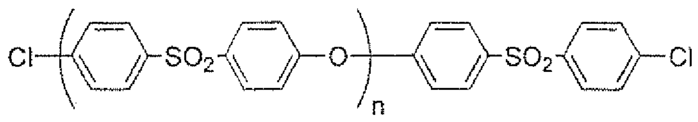

and 9.3 parts by weight of 2,2'-dipyridyl were loaded to a flask equipped with an azeotropic distillation apparatus and stirred. Thereafter, the bath temperature was increased to 100°C and toluene was removed by thermal distillation under reduced pressure to carry out azeotropic dehydration of moisture in the system and after cooling to 65°C, the pressure was turned to normal pressure. Next, 15.4 parts by weight of bis(1,5-cyclooctadiene) nickel (O) was added thereto and the temperature was increased to 70°C and the obtained mixture was stirred for 5 hours at the same temperature. After cooling, a large quantity of methanol was added to the reaction solution to precipitate a polymer, which was separated by filtration. Thereafter, washing with 6 mol/L of aqueous hydrochloric acid solution and filtration were repeated several times and thereafter the filtrate was washed until it became neutral and vacuum drying was carried out to obtain 3.0 parts by weight of an aimed polyarylene type block copolymer as follows. IEC was 2.2 meq/g and the number average molecular weight (Mn) and the weight average molecular weight (Mw) in terms of polystyrene determined by gel permeation chromatography (GPC) were 109000 and 204000, respectively. The obtained copolymer was defined as BCP-1. The reference characters n and m show the polymerization degrees of the repeating structures constituting the respective blocks of the block copolymer.

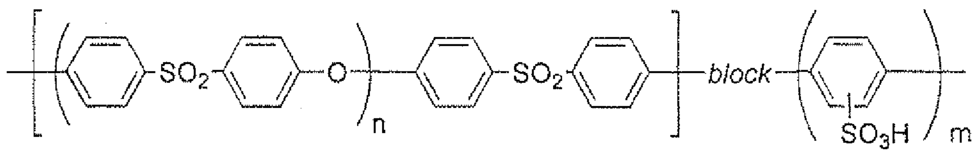

(Synthesis Example 2)

The following phosphonic acid group-containing polymer (in the following drawing, the average number r of phosphoric acid groups per one biphenyloxy unit was 1.6 and the average number s of bromine atoms was 0.1 or less) was obtained in the same production method of AD-2 described in the paragraphs (0058) to (0059) of JP-A No. 2006-66391. The polymer was defined as AD-1.

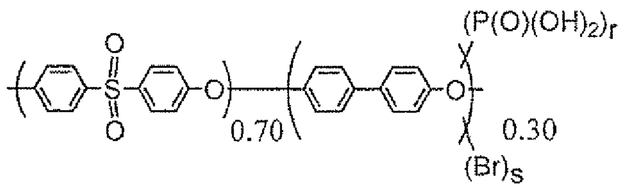

Example 1

A mixture of the block copolymer BCP-1 obtained in Synthesis Example 1 and the phosphonic acid group-containing polymer (called as AD-1) obtained in Synthesis Example 2 (weight ratio 90 to 10) was dissolved in DMSO to obtain a solution having a concentration of 10% by weight. The solution was set as a polymer electrolyte solution (A).

The obtained polymer electrolyte solution (A) was continuously casted onto a polyethylene terephthalate (PET) film (E5000 grade, manufactured by Toyobo Co., Ltd.) as a supporting substrate having a width of 300 and a length of 500 m using a slot die and the film was continuously fed to a hot-air heater drying furnace (set temperature 80°C; the drying furnace had temperature error of about -2°C from the set temperature and the temperature distribution (heating zone) in the entire drying furnace was 78 to 80°C) to remove the solvent, thereby obtaining a polymer electrolyte membrane intermediate (33 μm).

The residence time in the drying furnace and the amount of the remaining organic solvent in the polymer

electrolyte membrane intermediate of the laminate film 2 obtained after the laminate film 2 passing through the drying furnace are shown in Table 2.

Further, from a preliminary experiment carried out previously to this example, the amount of the remaining organic solvent in the layer containing an ion conductive polymer of the laminate film 1 immediately before the laminate film 1 was led to the drying furnace and after the polymer electrolyte solution (A) was casted onto the supporting substrate was found to be about 90% by weight.

The polymer electrolyte membrane intermediate of the laminate film 2 obtained in the above manner was immersed in 2N hydrochloric acid for 2 hours, washed with water for 2 hours, further dried by air blow, and peeled from the supporting substrate to produce a polymer electrolyte membrane 1.

Example 2

The following experiment was carried out using the same polymer electrolyte solution (A) as that in Example 1.

The polymer electrolyte solution (A) was continuously casted onto a polyethylene terephthalate (PET) film (E5000 grade, manufactured by Toyobo Co., Ltd.) as a supporting substrate having a width of 300 and a length of 500 m using a slot die and the film was continuously fed to a hot-air heater drying furnace (set temperature 75°C; the drying furnace had temperature error of about -2°C from the set temperature and the temperature distribution (heating zone) in the entire drying furnace was 73 to 75°C) to remove the solvent, thereby obtaining a polymer electrolyte membrane intermediate (21 μm).

The residence time in the drying furnace and the amount of the remaining organic solvent in the polymer electrolyte membrane intermediate of the laminate film 2 obtained after passing the drying furnace are shown in Table 2.

The polymer electrolyte membrane intermediate of the laminate film 2 obtained in the above manner was immersed in 2N hydrochloric acid for 2 hours, washed with water for 2 hours, further dried by air blow, and peeled from the supporting substrate to produce a polymer electrolyte membrane 2.

Example 3

The following experiment was carried out using the same polymer electrolyte solution (A) as that in Example 1.

The polymer electrolyte solution (A) was continuously casted onto a polyethylene terephthalate (PET) film (E5000 grade, manufactured by Toyobo Co., Ltd.) as a supporting substrate having a width of 300 and a length of 500 m using a slot die and the film was continuously fed to a hot-air heater drying furnace (set temperature 100°C; the drying furnace had temperature error of about -2°C from the set temperature and the temperature distribution (heating zone) in the entire drying furnace was 98 to 100°C) to remove the solvent, thereby obtaining a polymer electrolyte membrane intermediate (21 μm).

The residence time in the drying furnace and the amount of the remaining organic solvent in the polymer electrolyte membrane intermediate of the laminate film 2 obtained after passing the drying furnace are shown in Table 2.

The polymer electrolyte membrane intermediate of the laminate film 2 obtained in the above manner was immersed in 2N hydrochloric acid for 2 hours, washed with water for 2 hours, further dried by air blow, and peeled from the supporting substrate to produce a polymer electrolyte membrane 3.

Comparative Example 1

The following experiment was carried out using the same polymer electrolyte solution (A) as that in Example 1.

The polymer electrolyte solution (A) was continuously casted onto a polyethylene terephthalate (PET) film (E5000 grade, manufactured by Toyobo Co., Ltd.) as a supporting substrate having a width of 300 and a length of 500 m using a slot die and the film was continuously fed to a hot-air heater drying furnace (set temperature 80°C; the drying furnace had temperature error of about -2°C from the set temperature and the temperature distribution (heating zone) in the entire drying furnace was 78 to 80°C) to remove the solvent, thereby obtaining a polymer electrolyte membrane intermediate (38 μm).

The residence time in the drying furnace and the amount of the remaining organic solvent in the polymer electrolyte membrane intermediate of the laminate film 2 obtained after passing the drying furnace are shown in Table 2.

The polymer electrolyte membrane intermediate of the laminate film 2 obtained in the above manner was immersed in 2N hydrochloric acid for 2 hours, washed with water for 2 hours, further dried by air blow, and peeled from the supporting substrate to produce a polymer electrolyte membrane 4.

Comparative Example 2

The following experiment was carried out using the same polymer electrolyte solution (A) as that in Example 1.

The polymer electrolyte solution (A) was continuously casted onto a polyethylene terephthalate (PET) film (E5000 grade, manufactured by Toyobo Co., Ltd.) as a supporting substrate having a width of 300 and a length of 500 m using a slot die and the film was continuously fed to a hot-air heater drying furnace (set temperature 80°C; the drying furnace had temperature error of about -2°C from the set temperature and the temperature distribution (heating zone) in the entire drying furnace was 78 to 80°C) to remove the solvent, thereby obtaining a polymer electrolyte membrane intermediate (32 μm).

The residence time in the drying furnace and the amount of the remaining organic solvent in the polymer electrolyte membrane intermediate of the laminate film 2 obtained after passing the drying furnace are shown in Table 2.

The polymer electrolyte membrane intermediate of the laminate film 2 obtained in the above manner was immersed in 2N hydrochloric acid for 2 hours, washed with water for 2 hours, further dried by air blow, and peeled from the supporting substrate to produce a polymer electrolyte membrane 5.

The proton conductivity in the thickness direction, water absorption size alteration, and amount of remaining organic solvent (DMSO) (the amount of the remaining DMSO in each polymer electrolyte membrane intermediate of the laminate film 2 immediately after the laminate film 2 was taken out of the drying furnace) were measured for the polymer electrolyte membranes of Examples 1 to 3 and Comparative Examples 1 and 2. The results are shown in Table 2.

Table 2

| | Drying time (minutes) | Amount of remaining DMSO (% by weight) | Set temperature of drying furnace (°C) | Temperature range in heating zone (°C to °C) | Proton conductivity (S/cm) | In-plane size alteration rate (%) |
|---|---|---|---|---|---|---|
| Example 1 | 33 | 29 | 80 | 78-80 | 0.09 | 3 |
| Example 2 | 50 | 15 | 75 | 73-75 | 0.12 | 8 |
| Example 3 | 10 | 21 | 100 | 98-100 | 0.08 | 3 |
| Comparative Example 1 | 13 | 70 | 80 | 78-80 | 0.12 | * |
| Comparative Example 2 | 120 | 12 | 80 | 78-80 | 0.03 | 3 |
| * Measurement was impossible because of tearing of the membrane during the measurement. | | | | | | |

## Claims

1. A method for continuously producing a polymer electrolyte membrane comprising:

    (i) a preparation step for preparing a polymer electrolyte solution by dissolving a polymer electrolyte containing an ion conductive polymer having an ion-exchange group in an organic solvent capable of dissolving the polymer electrolyte,
    (ii) a coating step for continuously obtaining a laminate film 1 wherein a supporting substrate and a layer containing an ion conductive polymer are laminated, by casting the polymer electrolyte solution obtained in said step (i) onto the continuously fed supporting substrate, and
    (iii) a drying step for continuously obtaining a laminate film 2 wherein the supporting substrate and a polymer electrolyte membrane intermediate are laminated, by removing said organic solvent remaining in the layer containing an ion conductive polymer with passing the laminate film 1 obtained in said step (ii) in a drying furnace; wherein
    the residence time of the laminate film 1 in the drying furnace in said step (iii) is 50 minutes or shorter and the remaining organic solvent concentration in the polymer electrolyte membrane intermediate in the laminate film 2 immediately after the laminate film 2 passes through the drying furnace is 40% by weight or lower.

2. The method for continuously producing a polymer electrolyte membrane according to claim 1, wherein said drying furnace has a heating zone of 60 to 130°C.

3. The method for continuously producing a polymer electrolyte membrane according to claim 1 or 2, wherein the remaining organic solvent concentration in the layer containing an ion conductive polymer in the laminate film 1

immediately before the laminate film 1 comes in said drying furnace exceeds 70% by weight.

**4.** The method for continuously producing a polymer electrolyte membrane according to any one of claims 1 to 3, further comprising (iv) a winding step for winding the laminate film 2 obtained in the step (iii) on a winding core.

**5.** The method for continuously producing a polymer electrolyte membrane according to any one of claims 1 to 4, wherein said ion conductive polymer has an aromatic ring constituting the main chain and the ion-exchange group directly bonded or indirectly bonded through another atom or an atomic group to the aromatic ring constituting the main chain.

**6.** The method for continuously producing a polymer electrolyte membrane according to any one of claims 1 to 5, wherein the ion conductive polymer includes:

one or more structure units having an ion-exchange group selected from the following (1a), (2a), (3a) and (4a),

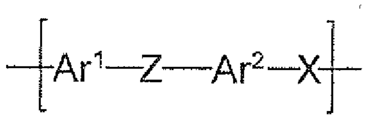

(1a)

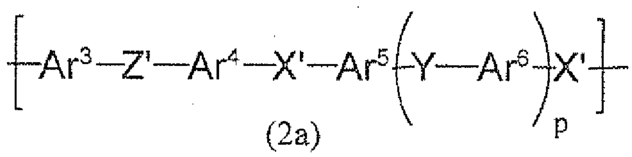

(2a)

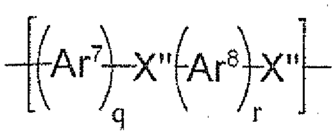

(3a)

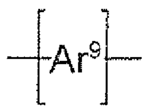

(4a)

wherein $Ar^1$ to $Ar^9$ each independently denote a bivalent aromatic group having an aromatic ring constituting the main chain and optionally having a side chain having an aromatic ring and having an ion-exchange group directly bonded to at least one aromatic ring selected from the group consisting of the aromatic ring constituting the main chain or the aromatic ring in the side chain; Z and Z' each independently denote -CO- or $-SO_2-$; X, X', and X" each independently denote -O- or -S-; Y denotes a direct bond or a group defined by the following formula (100); p denotes 0, 1, or 2; and q and r each independently denote 1, 2, or 3, and
one or more structure units having no ion-exchange group selected from the following (1b), (2b), (3b) and (4b),

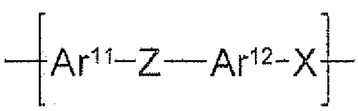

(1b)

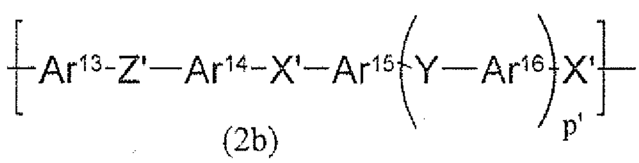

(2b)

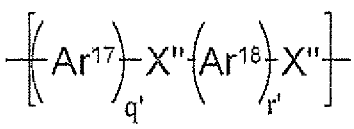

(3b)

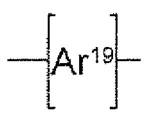

(4b)

wherein $Ar^{11}$ to $Ar^{19}$ each independently denote a divalent aromatic group optionally having a substituent group as a side chain; Z and Z' each independently denote -CO- or $-SO_2-$; X, X', and X" each independently denote

-O- or -S-; Y denotes a direct bond or a group defined by the following formula (100); p' denotes 0, 1, or 2; and q' and r' each independently denote 1, 2, or 3;

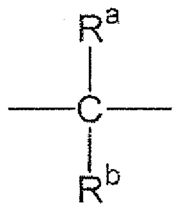
(100)

wherein $R^a$ and $R^b$ each independently denote a hydrogen atom, an optionally substituted alkyl group having 1 to 10 carbon atoms, an optionally substituted alkoxy group having 1 to 10 carbon atoms, an optionally substituted aryl group having 6 to 18 carbon atoms, an optionally substituted aryloxy group having 6 to 18 carbon atoms, or an optionally substituted acyl group having 2 to 20 carbon atoms and $R^a$ and $R^b$ may be bonded with each other to form a ring in combination with the carbon atoms to which they are bonded.

**7.** The method for continuously producing a polymer electrolyte membrane according to any one of claims 1 to 6, wherein said ion conductive polymer is a copolymer including one or more blocks (A) having an ion-exchange group and one or more blocks (B) having substantially no ion-exchange group, and having block copolymerization or graft copolymerization mode.

**8.** The method for continuously producing a polymer electrolyte membrane according to claim 7, wherein said ion conductive polymer includes a block in which the ion-exchange groups is directly bonded to the aromatic ring constituting the main chain as said blocks (A) having ion-exchange groups.

**9.** The method for continuously producing a polymer electrolyte membrane according to claim 7 or 8, wherein said ion conductive polymer includes, as said blocks (A) having an ion-exchange group, a block represented by the following formula (4a')

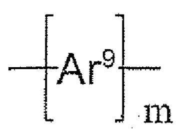
(4a')

wherein $Ar^9$ is the same in above formula (4b) and m denotes a polymerization degree of the structure unit constituting the block) and, as the blocks (B) having substantially no ion-exchange group, one or more blocks selected from the following formulas (1b'), (2b') and (3b')

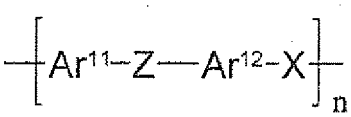
(1b')

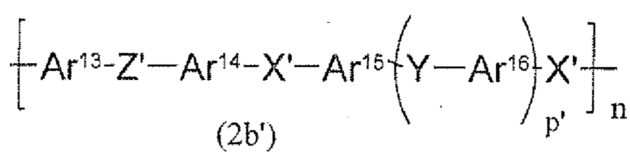
(2b')

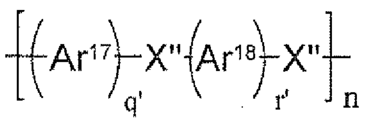
(3b')

(wherein, $Ar^{11}$ to $Ar^{18}$ each independently denote a divalent aromatic group optionally having a substituent group as a side chain; n denotes a polymerization degree of the structure unit constituting the block; and other reference characters denote the same as described above.

**10.** The method for continuously producing a polymer electrolyte membrane according to any one of claims 1 to 9, wherein the polymer electrolyte membrane has a microphase-separated structure into at least two or more microphases.

**11.** The method for continuously producing a polymer electrolyte membrane according to claim 10, wherein said ion conductive polymer is a copolymer including one or more blocks (A) having an ion-exchange group and one or more blocks (B) having substantially no ion-exchange group, having block copolymerization or graft copolymerization mode and said polymer electrolyte membrane includes a microphase-separated structure containing a phase in which density of the blocks (A) having an ion-exchange group is higher than that of the blocks (B) having substantially no ion-exchange group, and a phase in which density of the blocks (B) having substantially no ion-exchange group is higher than that of the blocks (A) having an ion-exchange group.

**12.** The method for continuously producing a polymer electrolyte membrane according to any one of claims 1 to 11, wherein said ion conductive polymer has a sulfonic acid group as the ion-exchange group.

**13.** A polymer electrolyte membrane obtained by the production method according to any one of claims 1 to 12.

**14.** A membrane electrode assembly comprising the polymer electrolyte membrane according to claim 13.

**15.** A fuel cell comprising the membrane electrode assembly according to claim 14.

Fig.1

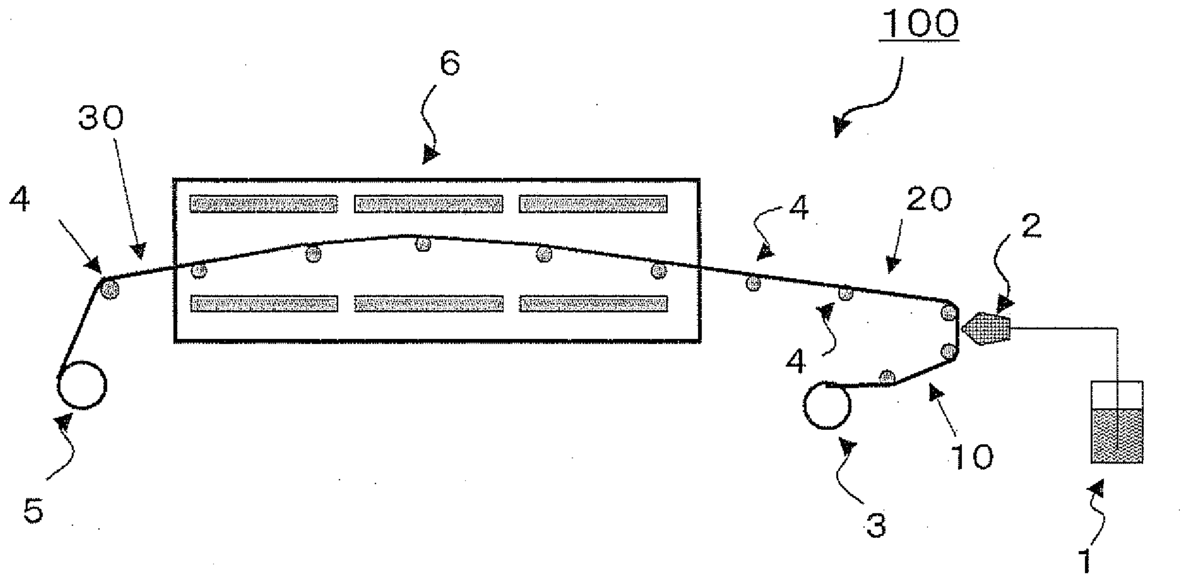


Fig.2

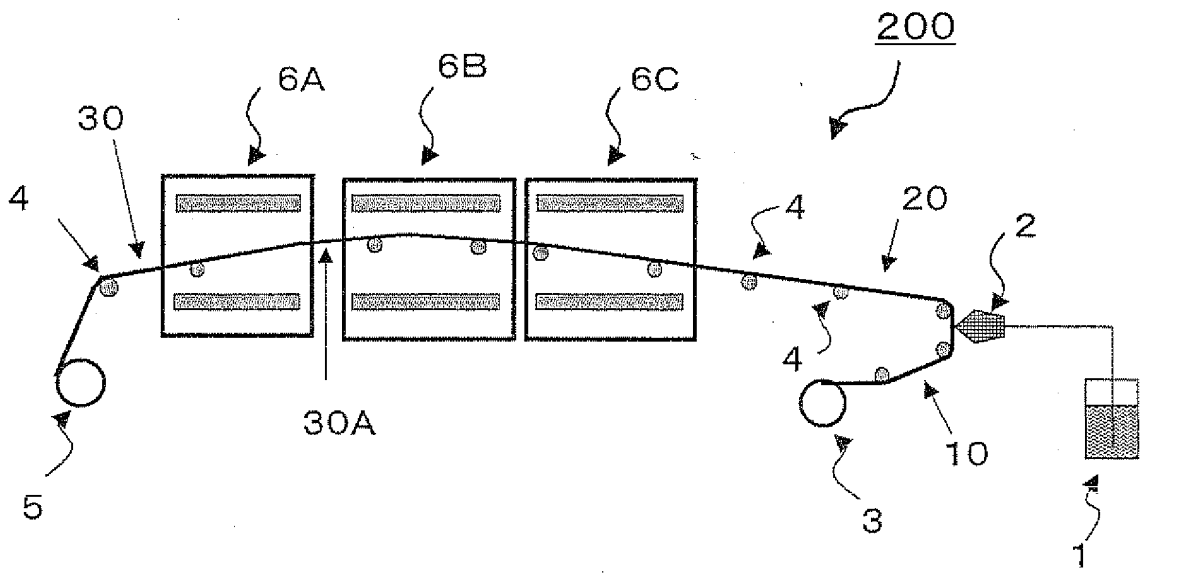

## INTERNATIONAL SEARCH REPORT

International application No.
PCT/JP2007/073260

A. CLASSIFICATION OF SUBJECT MATTER
*H01B13/00*(2006.01)i, *C08G75/23*(2006.01)i, *C08G81/00*(2006.01)i, *C08J5/22*(2006.01)i, *H01B1/06*(2006.01)i, *H01M8/02*(2006.01)i, *H01M8/10*(2006.01)i

According to International Patent Classification (IPC) or to both national classification and IPC

B. FIELDS SEARCHED

Minimum documentation searched (classification system followed by classification symbols)
H01B13/00, H01B1/06, H01M8/02, H01M8/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2006-253002 A (Toyobo Co., Ltd.),<br>21 September, 2006 (21.09.06),<br>Claims; Par. No. [0040]<br>(Family: none) | 13-15<br>1-12 |
| A | JP 2005-060516 A (Asahi Kasei Corp.),<br>10 March, 2005 (10.03.05),<br>Par. No. [0031]<br>(Family: none) | 14-15 |
| A | JP 2003-173798 A (Toyota Motor Corp.),<br>20 June, 2003 (20.06.03),<br>Full text<br>(Family: none) | 14-15 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 31 January, 2008 (31.01.08) | 12 February, 2008 (12.02.08) |
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.
PCT/JP2007/073260

C (Continuation). DOCUMENTS CONSIDERED TO BE RELEVANT

| Category* | Citation of document, with indication, where appropriate, of the relevant passages | Relevant to claim No. |
|---|---|---|
| A | JP 2006-302600 A (Asahi Glass Co., Ltd.), 02 November, 2006 (02.11.06), Claims; Par. No. [0059] (Family: none) | 14-15 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11502249 PCT
- JP 10045913 A
- JP 10021943 A
- JP 2001250567 A
- JP 2005126684 A
- JP 2005139432 A
- WO 200695919 A
- JP 2003201403 A
- JP 2003238678 A
- JP 2003282096 A
- JP 2005038834 A
- JP 2006066391 A


### Non-patent literature cited in the description


- *J. Electrochem. Soc.: Electrochemical Science and Technology,* 1988, vol. 135 (9), 2209
- *Desalination,* 2002, vol. 147, 191-196
- New Experimental Chemistry Lecture 19. Polymer Chemistry (II). Maruzen, 992